# EUROPEAN PATENT APPLICATION

(11) **EP 4 615 107 A1**
(43) Date of publication of application: **10.09.2025**
(21) Application number: 23890493.2
(22) Date of filing: 23.10.2023
(51) Int. Cl.: H04W 72/0453

(54) **RESOURCE ALLOCATION METHOD AND APPARATUS**

(30) Priority: 14.11.2022 CN 202211419015
(71) Applicant: Huawei Technologies Co., Ltd., Shenzhen, Guangdong 518129 (CN)
(72) Inventor: YU, Long, Shenzhen, Guangdong 518129 (CN); ZHANG, Min, Shenzhen, Guangdong 518129 (CN)
(74) Representative: Pfenning, Meinig & Partner mbB
(86) International application number: PCT/CN2023/125916
(87) International publication number: WO 2024/104057

(57) **Abstract**

This application provides a resource allocation method and apparatus, and belongs to the field of communication technologies, to improve frequency domain resource utilization. **In** the method, when a network device reserves, for a first terminal, a frequency domain resource set that can be used by the terminal, the network device may indicate, by using first information, the first terminal to use a part of frequency domain resources in the frequency domain resource set, for example, indicate the first terminal to use only a first frequency domain resource to perform data transmission. **In** this way, data transmission of a plurality of terminals is completed by using a frequency domain resource set of one terminal, and frequency domain resource utilization is improved. **In** addition, the terminal can implement TTI-level resource allocation type switching, so that a resource allocation type of the terminal can be adjusted and matched in real time.

## Description

This application claims priority to Chinese Patent Application No. 202211419015.2, filed with the China National Intellectual Property Administration on November 14, 2022 and entitled "RESOURCE ALLOCATION METHOD AND APPARATUS", which is incorporated herein by reference in its entirety.

### TECHNICAL FIELD

This application relates to the communication field, and in particular, to a resource allocation method and apparatus.

### BACKGROUND

In a new radio (new radio, NR) system, to implement uplink and downlink transmission with a terminal, a network device allocates a frequency domain resource in a resource block group (resource block group, RBG) form to the terminal. One RBG includes a plurality of RBs, and the terminal can use the plurality of RBs in the RBG to perform data transmission.

However, a frequency domain resource allocation type in the RBG form is fixed, causing low frequency domain resource utilization.

### SUMMARY

Embodiments of this application provide a resource allocation method and apparatus, to improve frequency domain resource utilization.

To achieve the foregoing objective, this application uses the following technical solutions.

According to a first aspect, a resource allocation method is provided. The method includes: A network device obtains first indication information, and sends the first indication information to a first terminal. The network device reserves, for the first terminal, a frequency domain resource set that can be used by the first terminal. The first indication information indicates the first terminal to use a first frequency domain resource in the frequency domain resource set, and indicates the first terminal not to use a second frequency domain resource in the frequency domain resource set.

Based on the method according to the first aspect, when the network device reserves, for the first terminal, the frequency domain resource set that can be used by the terminal, the network device may indicate, by using the first information, the first terminal to use a part of frequency domain resources in the frequency domain resource set, for example, indicate the first terminal to use only the first frequency domain resource to perform data transmission. In this way, data transmission of a plurality of terminals is completed by using a frequency domain resource set of one terminal, and frequency domain resource utilization is improved.

In a possible design solution, the first indication information includes information indicating that the first frequency domain resource is a non-punctured frequency domain resource, and information indicating that the second frequency domain resource is a punctured frequency domain resource, the information indicating that the first frequency domain resource is a non-punctured frequency domain resource indicates the first terminal to use the first frequency domain resource, and the information indicating that the second frequency domain resource is a punctured frequency domain resource indicates the first terminal not to use the second frequency domain resource. In this way, the first terminal can accurately identify, by determining whether a frequency domain resource is punctured, frequency domain resources that can be currently used by the first terminal and frequency domain resources that cannot be currently used by the first terminal, to avoid a resource conflict.

Optionally, the frequency domain resource set is a resource block group RBG, the first frequency domain resource or the second frequency domain resource includes one or more resource blocks RBs, and one RBG includes a plurality of resource blocks RBs. The first terminal can use a part of continuous RBs in the RBG or a part of discontinuous RBs in the RBG to perform data transmission, so that a frequency domain resource allocation type of the first terminal is more flexible.

Optionally, the first indication information is carried in at least one of the following: a first radio control information RRC message or a first downlink control information DCI message, to reuse existing signaling and reduce implementation difficulty.

In a possible design solution, the method according to the first aspect may further include: The network device sends second indication information to a second terminal. The second indication information indicates the second terminal to use the second frequency domain resource in the frequency domain resource set. In this way, the network device may determine, based on an actual requirement, terminals that can use the second frequency domain resource. For example, the second frequency domain resource can meet a data transmission requirement of the second terminal.

Optionally, the second indication information is carried in at least one of the following: the first radio control information RRC message or the first downlink control information DCI message, to reuse existing signaling and reduce implementation difficulty.

According to a second aspect, a resource allocation method is provided. The method includes: A first terminal receives first indication information from a network device, and uses a first frequency domain resource indicated by the first indication information. The network device reserves, for the first terminal, a frequency domain resource set that can be used by the first terminal. The first indication information indicates the first terminal to use the first frequency domain resource in the frequency domain resource set, and indicates the first terminal not to use a second frequency domain resource in the frequency domain resource set.

In a possible design solution, the first indication information includes information indicating that the first frequency domain resource is a non-punctured frequency domain resource, and information indicating that the second frequency domain resource is a punctured frequency domain resource, the information indicating that the first frequency domain resource is a non-punctured frequency domain resource indicates the first terminal to use the first frequency domain resource, and the information indicating that the second frequency domain resource is a punctured frequency domain resource indicates the first terminal not to use the second frequency domain resource.

Optionally, the frequency domain resource set is a resource block group RBG, and the first frequency domain resource or the second frequency domain resource includes one or more resource blocks RBs.

In a possible design solution, the first indication information is carried in at least one of the following: a first RRC message or a first DCI message.

For technical effects of the resource allocation method according to the second aspect, refer to the technical effects of the resource allocation method according to the first aspect. Details are not described herein again.

According to a third aspect, a resource allocation method is provided. The method includes: A second terminal receives second indication information from a network device, and uses a second frequency domain resource indicated by the second indication information. The second indication information indicates the second terminal to use the second frequency domain resource, the network device reserves, for another terminal, a frequency domain resource set that can be used by the another terminal, and the second frequency domain resource belongs to the frequency domain resource set.

In a possible design solution, the second indication information is carried in at least one of the following: a second RRC message or a second DCI message.

For technical effects of the resource allocation method according to the third aspect, refer to the technical effects of the resource allocation method according to the first aspect. Details are not described herein again.

According to a fourth aspect, a resource allocation method is provided. The method includes: A network device obtains indication information, and sends the indication information to a first terminal. The indication information indicates the first terminal to use a first bandwidth part BWP and a second bandwidth part BWP, and bandwidth of a frequency domain resource included in the first BWP is different from bandwidth of a frequency domain resource included in the second BWP.

Based on the method according to the fourth aspect, the bandwidth of the frequency domain resource included in the first BWP is different from the bandwidth of the frequency domain resource included in the second BWP, and different bandwidth corresponds to different quantities of RBs. In this case, the first terminal may select a corresponding BWP based on an actual service requirement to perform data transmission, to avoid a waste of resources, and improve frequency domain resource utilization.

In a possible design solution, the indication information specifically indicates the first terminal to use the frequency domain resource in the first BWP at a first moment to perform data transmission, and indicates the first terminal to use the frequency domain resource in the second BWP at a second moment to perform data transmission. The first terminal may select corresponding BWPs based on actual service requirements at different moments to perform data transmission, so that a frequency domain resource allocation granularity of the first terminal can be dynamically adjusted, and the frequency domain resource allocation granularity of the first terminal can be quickly switched through BWP switching.

In a possible design solution, the network device sends configuration information to the first terminal. The configuration information is used to configure, for the first terminal, the first BWP and the second BWP that are used by the first terminal. The network device pre-configures the first BWP and the second BWP of the first terminal, so that the network device can directly use a resource of the first terminal when scheduling the resource of the first terminal, to shorten a delay and improve communication efficiency between the network device and the first terminal.

In a possible design solution, the indication information is carried in at least one of the following: an RRC message or a DCI message, to reuse existing signaling and reduce implementation difficulty.

According to a fifth aspect, a resource allocation method is provided. The method includes: A first terminal receives indication information from a network device, and uses a frequency domain resource in a first BWP and a frequency domain resource in a second BWP based on the indication information to perform data transmission. The indication information indicates the first terminal to use the first bandwidth part BWP and a BWP, and bandwidth of the frequency domain resource included in the first BWP is different from bandwidth of the frequency domain resource included in the second BWP.

Optionally, the indication information specifically indicates the first terminal to use the frequency domain resource in the first BWP at a first moment to perform data transmission, and use the frequency domain resource in the second BWP at a second moment to perform data transmission.

In a possible design solution, the first terminal receives configuration information from the network device. The configuration information is used to configure, for the first terminal, the first BWP and the second BWP that are used by the first terminal.

In a possible design solution, the indication information is carried in at least one of the following: an RRC message or a DCI message.

For technical effects of the resource allocation method according to the fifth aspect, refer to the technical effects of the resource allocation method according to the fourth aspect. Details are not described herein again.

According to a sixth aspect, a resource allocation method is provided. The method includes: A network device obtains indication information, and sends the indication information to a first terminal. The indication information indicates the first terminal to use first power to perform data transmission, the first power includes power of a first frequency domain resource and power of a second frequency domain resource, the first frequency domain resource is a frequency domain resource that is allocated by the network device to the first terminal for use, and the second frequency domain resource is a frequency domain resource that is allocated by the network device to a second terminal and that is not used by the second terminal.

Based on the method according to the sixth aspect, when the network device pre-allocates the power of the first frequency domain resource to the first terminal for use, the network device indicates, by using the indication information, the first terminal to use, to perform data transmission, the power of the first frequency domain resource and power of the frequency domain resource that is not used by the second terminal. This can reduce a waste that is of frequency domain resources and that is caused by redundant power resources, and improve frequency domain resource utilization.

In a possible design solution, the indication information is carried in at least one of the following: an RRC message or a DCI message, to reuse existing signaling and reduce implementation difficulty.

According to a seventh aspect, a communication apparatus is provided. The apparatus includes modules configured to perform the method according to the first aspect, for example, a processing module and a transceiver module.

The processing module is configured to obtain first indication information. The transceiver module is configured to send the first indication information to a first terminal. The communication apparatus according to the seventh aspect reserves, for the first terminal, a frequency domain resource set that can be used by the first terminal. The first indication information indicates the first terminal to use a first frequency domain resource in the frequency domain resource set, and indicates the first terminal not to use a second frequency domain resource in the frequency domain resource set. The second frequency domain resource is used by another terminal.

In a possible design solution, the first indication information includes information indicating that the first frequency domain resource is a non-punctured frequency domain resource, and information indicating that the second frequency domain resource is a punctured frequency domain resource, the information indicating that the first frequency domain resource is a non-punctured frequency domain resource indicates the first terminal to use the first frequency domain resource, and the information indicating that the second frequency domain resource is a punctured frequency domain resource indicates the first terminal not to use the second frequency domain resource.

Optionally, the frequency domain resource set is a resource block group RBG, and the first frequency domain resource or the second frequency domain resource includes one or more resource blocks RBs.

Optionally, the first indication information is carried in at least one of the following: a first radio control information RRC message or a first downlink control information DCI message.

In a possible design solution, the transceiver module is further configured to send second indication information to a second terminal by using the communication apparatus according to the seventh aspect. The second indication information indicates the second terminal to use the second frequency domain resource in the frequency domain resource set.

Optionally, the second indication information is carried in at least one of the following: a second RRC message or a second DCI message.

Optionally, the transceiver module may include a sending module and a receiving module. The sending module is configured to implement a sending function of the communication apparatus according to the seventh aspect, and the receiving module is configured to implement a receiving function of the communication apparatus according to the seventh aspect.

Optionally, the communication apparatus according to the seventh aspect may further include a storage module, and the storage module stores a program or instructions. When the processing module executes the program or the instructions, the communication apparatus is caused to perform the resource allocation method according to the first aspect.

It should be noted that the apparatus according to the seventh aspect may be a network device, may be a chip (system) or another part or component that can be disposed in the network device, or may be an apparatus that includes the network device. This is not limited in this application.

In addition, for technical effects of the communication apparatus according to the seventh aspect, refer to the technical effects of the resource allocation method according to the first aspect. Details are not described herein again.

According to an eighth aspect, a communication apparatus is provided. The apparatus includes modules configured to perform the method according to the second aspect, for example, a transceiver module and a processing module.

The transceiver module is configured to receive first indication information from a network device. The processing module is configured to use a first frequency domain resource. The network device reserves, for the communication apparatus according to the eighth aspect, a frequency domain resource set that can be used by the communication apparatus. The first indication information indicates the communication apparatus to use a first frequency domain resource in the frequency domain resource set, and indicates the communication apparatus not to use a second frequency domain resource in the frequency domain resource set.

In a possible design solution, the first indication information includes information indicating that the first frequency domain resource is a non-punctured frequency domain resource, and information indicating that the second frequency domain resource is a punctured frequency domain resource, the information indicating that the first frequency domain resource is a non-punctured frequency domain resource indicates the communication apparatus according to the eighth aspect to use the first frequency domain resource, and the information indicating that the second frequency domain resource is a punctured frequency domain resource indicates the communication apparatus not to use the second frequency domain resource.

Optionally, the frequency domain resource set is a resource block group RBG, and the first frequency domain resource or the second frequency domain resource includes one or more resource blocks RBs.

Optionally, the first indication information is carried in at least one of the following: a first radio control information RRC message or a first downlink control information DCI message.

Optionally, the transceiver module may include a sending module and a receiving module. The sending module is configured to implement a sending function of the communication apparatus according to the eighth aspect, and the receiving module is configured to implement a receiving function of the communication apparatus according to the eighth aspect.

Optionally, the communication apparatus according to the eighth aspect may further include a storage module, and the storage module stores a program or instructions. When the processing module executes the program or the instructions, the communication apparatus is caused to perform the resource allocation method according to the second aspect.

It should be noted that the communication apparatus according to the eighth aspect may be a terminal, for example, a first terminal, may be a chip (system) or another part or component that can be disposed in the network device, or may be an apparatus that includes the terminal. This is not limited in this application.

In addition, for technical effects of the communication apparatus according to the eighth aspect, refer to the technical effects of the resource allocation method according to the second aspect. Details are not described herein again.

According to a ninth aspect, a communication apparatus is provided. The apparatus includes modules configured to perform the method according to the third aspect, for example, a transceiver module and a processing module.

The transceiver module is configured to receive second indication information from a network device. The processing module is configured to use a second frequency domain resource. The second indication information indicates the communication apparatus according to the ninth aspect to use the second frequency domain resource, the network device reserves, for another terminal, a frequency domain resource set that can be used by the another terminal, and the second frequency domain resource belongs to the frequency domain resource set.

In a possible design solution, the second indication information is carried in at least one of the following: a second RRC message or a second DCI message.

Optionally, the transceiver module may include a sending module and a receiving module. The sending module is configured to implement a sending function of the communication apparatus according to the ninth aspect, and the receiving module is configured to implement a receiving function of the communication apparatus according to the ninth aspect.

Optionally, the communication apparatus according to the ninth aspect may further include a storage module, and the storage module stores a program or instructions. When the processing module executes the program or the instructions, the communication apparatus is caused to perform the resource allocation method according to the third aspect.

It should be noted that the communication apparatus according to the ninth aspect may be a terminal, for example, a second terminal, may be a chip (system) or another part or component that can be disposed in the network device, or may be an apparatus that includes the terminal. This is not limited in this application.

In addition, for technical effects of the communication apparatus according to the ninth aspect, refer to the technical effects of the resource allocation method according to the third aspect. Details are not described herein again.

According to a tenth aspect, a communication apparatus is provided. The apparatus includes modules configured to perform the method according to the fourth aspect, for example, a processing module and a transceiver module.

The processing module is configured to obtain indication information. The transceiver module is configured to send the indication information to a first terminal. The indication information indicates the first terminal to use a first bandwidth part BWP and a second BWP, and bandwidth of a frequency domain resource included in the first BWP is different from bandwidth of a frequency domain resource included in the second BWP.

In a possible design solution, the indication information specifically indicates the first terminal to use the frequency domain resource in the first BWP at a first moment to perform data transmission, and indicates the first terminal to use the frequency domain resource in the second BWP at a second moment to perform data transmission.

In a possible design solution, the transceiver module is further configured to send configuration information to the first terminal. The configuration information is used to configure, for the first terminal, the first BWP and the second BWP that are used by the first terminal.

In a possible design solution, the indication information is carried in at least one of the following: an RRC message or a DCI message.

Optionally, the transceiver module may include a sending module and a receiving module. The sending module is configured to implement a sending function of the communication apparatus according to the tenth aspect, and the receiving module is configured to implement a receiving function of the communication apparatus according to the tenth aspect.

Optionally, the communication apparatus according to the tenth aspect may further include a storage module, and the storage module stores a program or instructions. When the processing module executes the program or the instructions, the communication apparatus is caused to perform the resource allocation method according to the fourth aspect.

It should be noted that the communication apparatus according to the tenth aspect may be a network device, may be a chip (system) or another part or component that can be disposed in the network device, or may be an apparatus that includes the network device. This is not limited in this application.

In addition, for technical effects of the communication apparatus according to the tenth aspect, refer to the technical effects of the resource allocation method according to the fourth aspect. Details are not described herein again.

According to an eleventh aspect, a communication apparatus is provided. The apparatus includes modules configured to perform the method according to the fifth aspect, for example, a transceiver module and a processing module.

The transceiver module is configured to receive indication information from a network device. The processing module is configured to use a frequency domain resource in a first BWP and a frequency domain resource in a second BWP to perform data transmission. The indication information indicates the communication apparatus according to the eleventh aspect to use the first bandwidth part BWP and the second BWP, and bandwidth of the frequency domain resource included in the first BWP is different from bandwidth of the frequency domain resource included in the second BWP.

In a possible design solution, the indication information indicates the communication apparatus according to the tenth aspect to use the frequency domain resource in the first BWP at a first moment, and indicates the communication apparatus to use the frequency domain resource in the second BWP at a second moment, to perform data transmission.

In a possible design solution, a sending module is further configured to receive configuration information from the network device. The configuration information is used to configure, for the communication apparatus, the first BWP and the second BWP that are used by the communication apparatus.

In a possible design solution, the indication information is carried in at least one of the following: an RRC message or a DCI message.

Optionally, the transceiver module may include a sending module and a receiving module. The sending module is configured to implement a sending function of the communication apparatus according to the eleventh aspect, and the receiving module is configured to implement a receiving function of the communication apparatus according to the eleventh aspect.

Optionally, the communication apparatus according to the eleventh aspect may further include a storage module, and the storage module stores a program or instructions. When the processing module executes the program or the instructions, the communication apparatus is caused to perform the resource allocation method according to the fifth aspect.

It should be noted that the communication apparatus according to the eleventh aspect may be a terminal, for example, a first terminal, may be a chip (system) or another part or component that can be disposed in the network device, or may be an apparatus that includes the terminal. This is not limited in this application.

In addition, for technical effects of the communication apparatus according to the eleventh aspect, refer to the technical effects of the resource allocation method according to the fifth aspect. Details are not described herein again.

According to a twelfth aspect, a communication apparatus is provided. The apparatus includes modules configured to perform the method according to the sixth aspect, for example, a transceiver module and a processing module.

The transceiver module is configured to obtain indication information. The processing module is configured to send the indication information to a first terminal. The indication information indicates the first terminal uses first power to perform data transmission, the first power includes power of a first frequency domain resource and power of a second frequency domain resource, the first frequency domain resource is a frequency domain resource allocated by the communication apparatus according to the twelfth aspect to the first terminal for use, and the second frequency domain resource is a frequency domain resource that is allocated by the communication apparatus to a second terminal and that is not used by the second terminal.

In a possible design solution, the indication information is carried in at least one of the following: an RRC message or a DCI message.

Optionally, the transceiver module may include a sending module and a receiving module. The sending module is configured to implement a sending function of the communication apparatus according to the twelfth aspect, and the receiving module is configured to implement a receiving function of the communication apparatus according to the twelfth aspect.

Optionally, the communication apparatus according to the twelfth aspect may further include a storage module, and the storage module stores a program or instructions. When the processing module executes the program or the instructions, the communication apparatus is caused to perform the resource allocation method according to the sixth aspect.

It should be noted that the communication apparatus according to the twelfth aspect may be a network device, may be a chip (system) or another part or component that can be disposed in the network device, or may be an apparatus that includes the network device. This is not limited in this application.

In addition, for technical effects of the communication apparatus according to the twelfth aspect, refer to the technical effects of the resource allocation method according to the sixth aspect. Details are not described herein again.

According to a thirteenth aspect, a communication apparatus is provided. The communication apparatus includes a processor. The processor is configured to perform the resource allocation method according to any one of the first aspect to the sixth aspect.

In a possible design solution, the communication apparatus according to the thirteenth aspect may further include a transceiver. The transceiver may be a transceiver circuit or an interface circuit. The transceiver may be used by the apparatus to communicate with another communication apparatus.

In a possible design solution, the communication apparatus according to the thirteenth aspect may further include a memory. The memory may be integrated with the processor, or may be separately disposed. The memory may be configured to store a computer program and/or data related to the resource allocation method according to any one of the first aspect to the sixth aspect.

In this application, the communication apparatus according to the thirteenth aspect may be the terminal or the network device according to the first aspect to the sixth aspect, a chip (system) or another part or component that can be disposed in the terminal or the network device, or an apparatus that includes the terminal or the network device.

In addition, for technical effects of the communication apparatus according to the thirteenth aspect, refer to the technical effects of the resource allocation method according to any one of the first aspect to the sixth aspect. Details are not described herein again.

According to a fourteenth aspect, a communication apparatus is provided. The communication apparatus includes a processor. The processor is coupled to a memory, and the processor is configured to execute a computer program stored in the memory, to cause the communication apparatus to perform the resource allocation method according to any one of the first aspect to the sixth aspect.

In a possible design solution, the communication apparatus according to the fourteenth aspect may further include a transceiver. The transceiver may be a transceiver circuit or an interface circuit. The transceiver may be used by the apparatus to communicate with another communication apparatus.

In this application, the communication apparatus according to the fourteenth aspect may be the terminal or the network device according to the first aspect to the sixth aspect, a chip (system) or another part or component that can be disposed in the terminal or the network device, or an apparatus that includes the terminal or the network device.

In addition, for technical effects of the communication apparatus according to the fourteenth aspect, refer to the technical effects of the resource allocation method according to any one of the first aspect to the sixth aspect. Details are not described herein again.

According to a fifteenth aspect, a communication apparatus is provided, and includes a processor and a memory. The memory is configured to store a computer program. When the processor executes the computer program, the communication apparatus is caused to perform the resource allocation method according to any one of the first aspect to the sixth aspect.

In a possible design solution, the communication apparatus according to the fifteenth aspect may further include a transceiver. The transceiver may be a transceiver circuit or an interface circuit. The transceiver may be used by the apparatus to communicate with another communication apparatus.

In this application, the communication apparatus according to the fifteenth aspect may be the terminal or the network device according to the first aspect to the sixth aspect, a chip (system) or another part or component that can be disposed in the terminal or the network device, or an apparatus that includes the terminal or the network device.

In addition, for technical effects of the communication apparatus according to the fifteenth aspect, refer to the technical effects of the resource allocation method according to any one of the first aspect to the sixth aspect. Details are not described herein again.

According to a sixteenth aspect, a communication apparatus is provided, and includes a processor. The processor is configured to: after being coupled to a memory and reading a computer program in the memory, perform the resource allocation method according to any one of the first aspect to the sixth aspect based on the computer program.

In a possible design solution, the communication apparatus according to the sixteenth aspect may further include a transceiver. The transceiver may be a transceiver circuit or an interface circuit. The transceiver may be used by the apparatus to communicate with another communication apparatus.

In this application, the communication apparatus according to the sixteenth aspect may be the terminal or the network device according to the first aspect to the sixth aspect, a chip (system) or another part or component that can be disposed in the terminal or the network device, or an apparatus that includes the terminal or the network device.

In addition, for technical effects of the communication apparatus according to the sixteenth aspect, refer to the technical effects of the resource allocation method according to any one of the first aspect to the sixth aspect. Details are not described herein again.

According to a seventeenth aspect, a resource allocation system is provided. The resource allocation system includes the terminal or the network device according to the first aspect to the sixth aspect.

According to an eighteenth aspect, a computer-readable storage medium is provided, and includes a computer program or instructions. When the computer program or the instructions are run on a computer, the computer is caused to perform the resource allocation method according to any one of the first aspect to the sixth aspect.

According to a nineteenth aspect, a computer program product is provided, and includes a computer program or instructions. When the computer program or the instructions are run on a computer, the computer is caused to perform the resource allocation method according to any one of the first aspect to the sixth aspect.

### BRIEF DESCRIPTION OF DRAWINGS

FIG. 1 is a diagram 1 of a scenario of resource allocation type switching;
FIG. 2 is a diagram 2 of a scenario of resource allocation type switching;
FIG. 3 is a diagram of an architecture of a resource allocation system according to an embodiment of this application;
FIG. 4 is a schematic flowchart 1 of a resource allocation method according to an embodiment of this application;
FIG. 5 is a diagram 1 of RBG frequency domain resource reusing according to an embodiment of this application;
FIG. 6 is a diagram 2 of RBG frequency domain resource reusing according to an embodiment of this application;
FIG. 7 is a diagram 3 of RBG frequency domain resource reusing according to an embodiment of this application;
FIG. 8 is a schematic flowchart 2 of a resource allocation method according to an embodiment of this application;
FIG. 9 is a diagram of resource allocation granularity switching according to an embodiment of this application;
FIG. 10 is a diagram of a BWP switching process of a first terminal according to an embodiment of this application;
FIG. 11 is a schematic flowchart 3 of a resource allocation method according to an embodiment of this application;
FIG. 12 is a diagram of terminal power conversion according to an embodiment of this application;
FIG. 13 is a diagram 1 of a structure of a communication apparatus according to an embodiment of this application; and
FIG. 14 is a diagram 2 of a structure of a communication apparatus according to an embodiment of this application.

### DESCRIPTION OF EMBODIMENTS

For ease of understanding, the following first describes technical terms mentioned in embodiments of this application.

### 1. Downlink (downlink, DL) resource allocation type (resource allocation type, RA type)

As defined in a new radio (new radio, NR) protocol, resource allocation types of a physical downlink shared channel (physical downlink shared channel, PDSCH) are classified into a type0 type and type1.

A minimum resource allocation granularity in the type0 type is a resource block group (resource block group, RBG), each RBG includes a plurality of resource blocks (resource block, RB), and frequency domain resources allocated by a network device to a terminal in the type0 type may be continuous or discontinuous. The network device may indicate RB resource allocation by using a bitmap (bitmap) of the RBG. Each bit (bit) in the bitmap represents one RBG, and the bitmap may be carried in a resource allocation field in downlink control information (downlink control information, DCI). The network device may send a DCI message to the terminal, to send information about the bitmap to the terminal.

An RBG size is related to a bandwidth part (bandwidth part, BWP) size. Table 1 shows a correspondence between the BWP size and the RBG size. As shown in Table 1, if a BWP belongs to an RB resource range from 1 to 36, the RBG size may be 2 RBs or four RBs; if a BWP belongs to an RB resource range from 37 to 42, the RBG size may be four RBs or 8 RBs; if a BWP belongs to an RB resource range from 73 to 144, the RBG size may be 8 RBs or 16 RBs; or if a BWP belongs to an RB resource range from 145 to 275, the RBG size may be 16 RBs.

**Table 1**

| Bandwidth part | RBG size | RBG size |
|---|---|---|
| 1 to 36 | 2 | 4 |
| 37 to 42 | 4 | 8 |
| 73 to 144 | 8 | 16 |
| 145 to 275 | 16 | 16 |

The correspondence between the BWP size and the RBG size shown in Table 1 is merely an example. The correspondence between the BWP size and the RBG size may alternatively be another case. This is not limited herein.

A minimum resource allocation granularity in the type1 type is a resource block RB, and frequency domain resources allocated by the network device to the terminal in the type1 type are usually continuous. RB resource allocation may be indicated by using a resource indication value (resource indication value, RIV), to be specific, a start RB position and a quantity of RBs are indicated by using the RIV. The RIV may be carried in the resource allocation field in the DCI message. The network device may send information about the RIV to the terminal by using the DCI message.

Based on the resource allocation types of the type0 type and the type1 type, it can be learned that in the type0 type, a resource allocation granularity is large, a frequency domain position is more flexible, and the frequency domain resources allocated by the network device to the terminal may be continuous or discontinuous; and in the type1 type, a resource allocation granularity is small, and the frequency domain resources allocated by the network device to the terminal are usually continuous.

In an actual application scenario, a service type and a service requirement on a terminal side dynamically change. It is assumed that a frequency domain resource allocation type on a network device side is fixed to a specific type.

In this case, when allocation is performed using the type0 type, and the terminal has a small service volume requirement at a specific moment, the network device schedules the terminal by using an RBG, only a part of RBs in the RBG needs to be used for an actual service requirement of the terminal, and an unused RB in the RBG is occupied by redundant information. Consequently, padding (padding) increases, causing a waste of frequency domain resources, and reducing communication efficiency.

When allocation is performed using the type1 type, and a service volume requirement of the terminal rises at a specific moment, the network device schedules the terminal by using continuous RBs. Consequently, resource allocation flexibility is poor, and packet interception is easily generated for a large-packet service. For example, there is a large service requirement of a terminal 1 at a specific moment, that is, large-packet data, and the terminal 1 needs to continuously occupy 33 RBs: an RB 13 to an RB 45. In this case, if a terminal 2 has occupied 5 RBs: an RB 35 to an RB 40, the terminal 1 usually transmits a part of data in the large-packet data, causing packet interception.

Therefore, the network device needs to flexibly use different resource allocation types based on a change of a terminal service. According to the NR protocol, if the terminal does not report, to the network device, a capability supporting flexible switching between type0 and type1, it indicates that the terminal supports only static configuration of type0 or type1, in other words, the terminal can use only one of the resource allocation types in a period of time. If the terminal expects to switch an allocation type, the resource allocation type can be switched only by the network device by sending a radio resource control (radio resource control, RRC) message to the terminal for reconfiguration.

For example, when the terminal initially accesses the network device, the network device configures the resource allocation type being type0 for the terminal, and schedules the terminal at an RBG granularity. Then, the network device monitors a service of the terminal, and if finding that the service requirement of the terminal changes, the network device switches the resource allocation type by sending the RRC to the terminal. Specifically, the following two cases may be included.

If the service requirement of the terminal changes from a large service volume to a small service volume, the network device switches a resource allocation type of a PDSCH of the terminal to type1 by using the RRC message.

If the service requirement of the terminal changes from a small service volume to a large service volume, the network device switches a resource allocation type of a PDSCH of the terminal to type0 by using the RRC message.

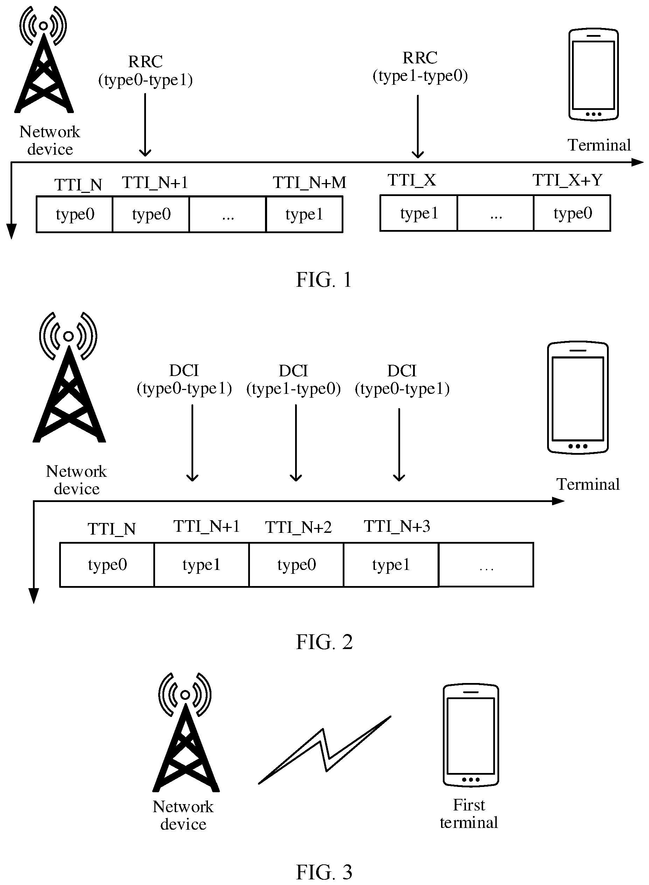

For example, FIG. 1 is a diagram 1 of a scenario of resource allocation type switching. As shown in FIG. 1, a network device uses one of resource allocation types in a time transmission time interval (transmission time interval, TTI). For example, the network device schedules a terminal in a type0 type in TTI_N and TTI_N+1. The network device may send an RRC message to the terminal in TTI_N+1, to indicate the terminal to switch to a resource allocation type of type1. Because the network device needs long processing time to reconfigure the RRC message of the terminal, the terminal can complete switching from type0 to type 1 only in TTI_N+M. The network device schedules the terminal in the type1 type in TTI_X. The network device may send the RRC message to the terminal in TTI_X, to indicate the terminal to switch to the resource allocation type of type0. Because the network device needs long processing time to reconfigure the RRC message of the terminal, the terminal can complete switching from type1 to type0 only in TTI_X+Y.

If the terminal reports, to the network device, a capability of supporting flexible switching between type0 and type1, it indicates that the terminal may further support flexible rate switching of type0 or type1 in addition to supporting static configuration of type0 or type1. In other words, the network device may send a DCI message to the terminal in each TTI, to indicate the terminal to quickly switch the resource allocation type in each TTI.

For example, FIG. 2 is a diagram 2 of a scenario of resource allocation type switching. As shown in FIG. 2, a network device schedules a terminal in a type0 type in TTI_N. The network device may send a DCI message to the terminal in TTI_N+1, to indicate the terminal to quickly switch to a resource allocation type of type1 in TTI_N+1; the network device may send the DCI message to the terminal in TTI_N+2, to indicate the terminal to quickly switch to a resource allocation type of type0 in TTI_N+2; and the network device may send the DCI message to the terminal in TTI_N+3, to indicate the terminal to quickly switch to the resource allocation type of type1 in TTI_N+3. The rest may be deduced by analogy.

It can be seen that the foregoing conventional technology mainly has the following problems.
(1) For a mainstream commercial chip/terminal, the resource allocation type of type0 is mainly used to schedule the terminal. A minimum resource allocation granularity of the resource allocation type of type0 is an RBG form. It can be learned from the foregoing descriptions that a frequency domain resource allocation type in the RBG form is fixed, causing a waste of frequency domain resources.
(2) For a terminal that does not support TTI-level resource allocation type switching, to be specific, a terminal that does not have a capability of supporting flexible switching between type0 and type1, the network device depends on sending an RRC reconfiguration message to the terminal to switch the resource allocation type. In this case, if there are a large quantity of terminals and the service requirement changes frequently, the network device needs to reconfigure RRC messages of the large quantity of terminals, the reconfiguration takes long time, and a rate of switching the resource allocation type of the terminal is low.

In conclusion, for the foregoing technical problems, embodiments of this application provide the following technical solutions, to resolve a problem that frequency domain resource utilization is low because the frequency domain resource allocation type in the RBG form is fixed.

The following describes the technical solutions of this application with reference to accompanying drawings.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, 4G, for example, a long term evolution (long term evolution, LTE) system, a worldwide interoperability for microwave access (worldwide interoperability for microwave access, WiMAX) communication system, 5G, for example, a new radio (new radio, NR) system, and a future communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, words such as "example" and "for example" indicate giving an example, an illustration, or a description. Any embodiment or design solution described as the "example" in this application should not be explained as being more preferred or having more advantages than another embodiment or design solution. Exactly, the word "example" is intended to present a concept in a specific manner.

In embodiments of this application, "information (information)", "signal (signal)", "message (message)", "channel (channel)", and "signaling (signaling)" may be interchangeably used sometimes. It should be noted that meanings expressed by the terms are matchable when differences of the terms are not emphasized. "Of (of)", "corresponding (corresponding, relevant)", and "corresponding (corresponding)" may sometimes be interchangeably used. It should be noted that meanings expressed by the terms are matchable when differences of the terms are not emphasized. In addition, "/" mentioned in this application may indicate an "or" relationship. It may be understood that in this application, an "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or different. A specific sending method is not limited in this application. The sending periodicities and/or the sending occasions of these pieces of sub-information may be predefined, for example, predefined according to a protocol, or may be configured by a transmit-end device by sending configuration information to a receive end device.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to a similar technical problem.

For ease of understanding embodiments of this application, a resource allocation system shown in FIG. 3 is first used as an example to describe in detail a resource allocation system applicable to embodiments of this application. For example, FIG. 3 is a diagram of an architecture of a resource allocation system to which a resource allocation method is applicable according to an embodiment of this application.

As shown in FIG. 3, the resource allocation system mainly includes a network device and a first terminal.

The network device may be an access network (access network, AN) device, or may be referred to as a radio access network (radio access network, RAN) device. The RAN device may provide an access function for a terminal, and is responsible for functions such as radio resource management, quality of service (quality of service, QoS) management, and data compression and encryption on an air interface side. The RAN device may include a gNB in 5G, for example, an NR system, or one antenna panel or a group (including a plurality of antenna panels) of antenna panels of a base station in 5G, or may be a network node that forms a gNB, a transmission point (transmission reception point, TRP, or transmission point, TP), or a transmission measurement function (transmission measurement function, TMF), such as a baseband unit (building baseband unit, BBU), a central unit (central unit, CU) or a distributed unit (distributed unit, DU), an RSU having a base station function, a wired access gateway, or a 5G core network element. Alternatively, the RAN device may further include an access point (access point, AP) in a wireless fidelity (wireless fidelity, Wi-Fi) system, a wireless relay node, a wireless backhaul node, various forms of macro base stations, a micro base station (also referred to as a small cell), a relay station, an access point, a wearable device, a vehicle-mounted device, or the like. Alternatively, the RAN device may include a next-generation mobile communication system, for example, a 6G access network device like a 6G base station. Alternatively, in a next-generation mobile communication system, the network apparatus may be named in other manners, and all the manners fall within the protection scope of embodiments of this application. This is not limited in this application.

The first terminal may be a terminal having a transceiver function, or a chip or a chip system that can be disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in this embodiment of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be a vehicle-mounted module, a vehicle-mounted assembly, a vehicle-mounted part, a vehicle-mounted chip, or a vehicle-mounted unit that is built in a vehicle as one or more parts or units.

It may be understood that FIG. 3 is merely a simplified diagram used as an example for ease of understanding. The resource allocation system may further include another network apparatus and/or another terminal device, which are not drawn in FIG. 3.

In the resource allocation system in this embodiment of this application, a terminal that does not have a capability of supporting flexible switching between type0 and type1 is denoted as the first terminal. When the network device reserves, for the first terminal, a frequency domain resource set that can be used by the terminal, the network device may indicate, by using first information, the first terminal to use a part of frequency domain resources in the frequency domain resource set, for example, indicate the first terminal to use only a first frequency domain resource to perform data transmission. In this way, data transmission of a plurality of terminals is completed by using a frequency domain resource set of one terminal, and frequency domain resource utilization is improved. Further, TTI-level resource allocation type switching can be implemented, so that a resource allocation type of the terminal can be adjusted and matched in real time.

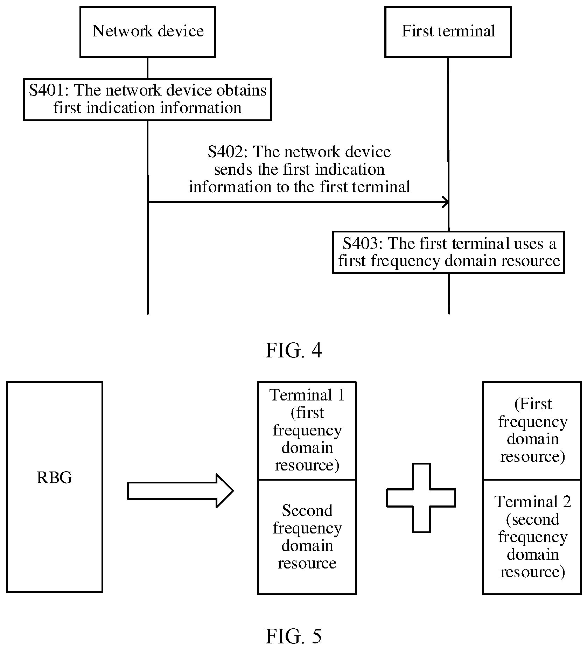

For ease of understanding, the following specifically describes resource allocation methods provided in embodiments of this application with reference to FIG. 4 to FIG. 12.

### Embodiment 1

For example, FIG. 4 is a schematic flowchart 1 of a resource allocation method according to an embodiment of this application. The method is applicable to communication between the network device and the first terminal in the foregoing resource allocation system. In this application, for a terminal that does not have a capability of supporting flexible switching between type0 and type1, frequency domain resource allocation is performed using the foregoing type0 type.

Specifically, as shown in FIG. 4, a procedure of the resource allocation method is as follows.

S401: The network device obtains first indication information.

The first indication information may indicate the first terminal to use a first frequency domain resource in a frequency domain resource set, and indicate the first terminal not to use a second frequency domain resource in the frequency domain resource set.

The frequency domain resource set may be a frequency domain resource set that is pre-allocated by the network device to the first terminal for use, in other words, the network device reserves, for the first terminal, the frequency domain resource set that can be used by the first terminal. The frequency domain resource set may be an RB-level frequency domain resource set, for example, a plurality of RBs, may be an RBG-level frequency domain resource set, for example, one or more RBGs, or may be a frequency domain resource of any possible level. This is not limited. The frequency domain resource set may include a plurality of frequency domain resources, for example, the first frequency domain resource and the second frequency domain resource, and may further include another frequency domain resource. This is not limited.

The first frequency domain resource may be a frequency domain resource that is in the frequency domain resource set and that is actually used by the first terminal to perform data transmission, and may be specifically one or more RBs. These RBs may be continuous or discontinuous, so that the first terminal can flexibly select, based on an actual requirement, a frequency domain resource actually used by the first terminal, and a frequency domain resource allocation type is more flexible. The second frequency domain resource may be a frequency domain resource that is in the frequency domain resource set and that is actually not used by the first terminal to perform data transmission, that is, an idle frequency domain resource, and may be specifically one or more RBs.

That the network device reserves, for the first terminal, a frequency domain resource set that can be used by the first terminal may also be understood as that the network device reserves a frequency domain resource set for the first terminal, or may also be understood as that the network device allocates a frequency domain resource set to the first terminal.

The first indication information may include information indicating that the first frequency domain resource is a non-punctured frequency domain resource, and information indicating that the second frequency domain resource is a punctured frequency domain resource. The information indicating that the first frequency domain resource is a non-punctured frequency domain resource may indicate the first terminal to use the first frequency domain resource, and the information indicating that the second frequency domain resource is a punctured frequency domain resource may indicate the first terminal not to use the second frequency domain resource. In other words, the first indication information may specifically indicate, by indicating a puncturing status of a resource, whether the resource can be used by a terminal.

For example, the network device may puncture the frequency domain resource set in a rate matching (rate matching, RM) manner. Rate matching refers to puncturing (punctured) a bit on a channel to match a carrying capability of the channel.

The punctured frequency domain resource and the non-punctured frequency domain resource may be indicated by using an RM pattern (pattern). That is, the first indication information is specifically the RM pattern, or may be information indicating the RM pattern, for example, an index of the RM pattern. The RM pattern may be an RM pattern in a bitmap (bitmap) form. In other words, a value of each bit in the RM pattern may correspondingly indicate whether a frequency domain resource in the frequency domain resource set is a punctured frequency domain resource or a non-punctured frequency domain resource. For example, a value of one or more bits corresponding to the first frequency domain resource is 0, indicating that the one or more RBs corresponding to the first frequency domain resource are non-punctured frequency domain resources, and a value of one or more bits corresponding to the second frequency domain resource is 1, indicating that the one or more RBs corresponding to the second frequency domain resource are punctured frequency domain resources. Therefore, a value of a bitmap including these bits may indicate respective puncturing statuses of the plurality of RBs corresponding to the frequency domain resource set.

It may be understood that the first indication information may alternatively indicate, in any other possible manner, whether a frequency domain resource can be used by a terminal. For example, the first indication information may indicate only the first frequency domain resource, for example, carry an identifier of the first frequency domain resource. In this way, the first terminal can determine, based on the first indication information indicating only the first frequency domain resource, that the second frequency domain resource in the frequency domain resource set is not indicated, to determine that the second frequency domain resource cannot be used by the first terminal.

A first indication message may alternatively be a first instruction, first indication signaling, or the like. This is not limited herein.

S402: The network device sends the first indication information to the first terminal. The first terminal receives the first indication information from the network device.

The network device may send the first indication information to the first device by using a first RRC message and/or a first DCI message.

If the first indication information is carried in the first RRC message, the RM pattern in the first indication information indicates the terminal to use a frequency domain resource corresponding to the RM pattern in a plurality of TTIs scheduled by using the RRC message. In other words, the first frequency domain resource may be a frequency domain resource used by the terminal in the plurality of TTIs, and the second frequency domain resource may be a frequency domain resource that is not used by the terminal in the plurality of TTIs. For example, the frequency domain resource set RBG includes 16 RBs, a bitmap of the RM pattern in the first indication information is 0000000011111111, and the bitmap may sequentially indicate, from left to right, an RB 0 to an RB 15 that correspond to the RBG. In this case, the network device indicates, by using the first RRC message, the terminal to use, to perform data transmission, the RB 0 to the RB 7 of the RBG in the plurality of TTIs scheduled by using the first RRC message, and not to use resources of the RB 8 to the RB 15 of the RBG.

If the first indication information is carried in the first DCI message, the RM pattern in the first indication information indicates the terminal to use a frequency domain resource corresponding to the RM pattern in one TTI scheduled by using the first DCI message. The network device may schedule, by using the first DCI message in a next TTI, the terminal to use a frequency domain resource corresponding to another RM pattern. In this case, a frequency domain resource that can be used by the terminal may be different from a frequency domain resource that cannot be used by the terminal in each TTI.

For example, the frequency domain resource set RBG includes 16 RBs, the network device indicates, by using the DCI message in TTI_A, the terminal to use a frequency domain resource corresponding to an RM pattern 1, and the network device indicates, by using the first DCI message in TTI_B, the terminal to use a frequency domain resource corresponding to an RM pattern 2. The RM pattern 1 and the RM pattern 2 may each be indicated by using a 2-bit bitmap, and the bitmap may be 00, 01, 10, or 11. The bitmap being 00 may indicate that the 16 RBs of the RBG are not punctured. The bitmap being 01 may indicate that first 8 RBs of the RBG are not punctured, and last 8 RBs of the RBG are punctured. The bitmap being 10 may indicate that first 8 RBs of the RBG are punctured, and last 8 RBs of the RBG are not punctured. The bitmap being 11 may indicate that the 16 RBs of the RBG are punctured. The bitmap may further indicate the terminal to puncture any RB position in the RBG. This is not limited herein.

If the bitmap of the RM pattern 1 is 01, it indicates the terminal to use the first 8 RBs of the RBG in TTI_A to perform data transmission, and not to use resources of the last 8 RBs of the RBG. If the bitmap of the RM pattern 2 is 10, it indicates the terminal to use the last 8 RBs of the RBG in TTI_B to perform data transmission, and not to use resources of the first 8 RBs of the RBG.

It may be understood that the first RRC message may be alternatively represented by using an RRC message 1, an RRC message a, or the like. This is not limited herein.

S403: The first terminal uses the first frequency domain resource.

The first terminal may determine an available frequency domain resource and an unavailable frequency domain resource in the frequency domain resource set based on an indication of the first indication information, so that the first terminal can use the available frequency domain resource in the frequency domain resource set to perform data transmission.

The first indication information may be carried in the first RRC message. For example, the frequency domain resource set RBG includes the 16 RBs, the bitmap of the RM pattern in the first indication information is 0000000011111111, and the bitmap may sequentially indicate, from left to right, the RB 0 to the RB 15 that correspond to the RBG. In this case, the network device indicates, by using the first RRC message, the terminal to use, to perform data transmission, the RB 0 to the RB 7 of the RBG in the plurality of TTIs scheduled by using the first RRC message, and not to use the resources of the RB 8 to the RB 15 of the RBG.

The first indication information may be carried in the first DCI message. For example, the network device indicates, by using the first DCI message in TTI_A, the terminal to use the frequency domain resource corresponding to the RM pattern 1, and the network device indicates, by using the first DCI message in TTI_B, the terminal to use the frequency domain resource corresponding to the RM pattern 2. If the bitmap of the RM pattern 1 is 01, it indicates the terminal to use the first 8 RBs of the RBG in TTI_A to perform data transmission, and not to use the resources of the last 8 RBs of the RBG. If the bitmap of the RM pattern 2 is 10, it indicates the terminal to use the last 8 RBs of the RBG in TTI_B to perform data transmission, and not to use the resources of the first 8 RBs of the RBG.

In conclusion, in this embodiment of this application, when the network device reserves, for the first terminal, the frequency domain resource set that can be used by the terminal, the network device may indicate, by using the first information, the first terminal to use a part of frequency domain resources in the frequency domain resource set, for example, indicate the first terminal to use only the first frequency domain resource, to perform data transmission. In this way, data transmission of a plurality of terminals is completed by using a frequency domain resource set of one terminal, and frequency domain resource utilization is improved. Further, TTI-level resource allocation type switching can be implemented, so that a resource allocation type of the terminal can be adjusted and matched in real time.

With reference to the foregoing embodiment, optionally, the method further includes: The network device sends second indication information to a second terminal. The second terminal receives the second indication information from the network device.

With reference to the foregoing embodiment, optionally, the method further includes: The network device sends second indication information to a second terminal. The second terminal receives the second indication information from the network device.

The second terminal uses the second frequency domain resource.

The second terminal may be a terminal having a transceiver function, or may be a chip or a chip system that can be disposed in the terminal. For specific descriptions, refer to the related descriptions of the first terminal. Details are not described herein again.

The network device may reserve, for another terminal, a frequency domain resource set that can be used by the another terminal, and the second indication information indicates that the second terminal can use the second frequency domain resource in the frequency domain resource set to perform data transmission.

The second indication information may indicate a corresponding RM pattern by using the bitmap, and the RM pattern of the second indication information is opposite to indication information of the RM pattern of the first indication information. In other words, the RM pattern of the second indication information may indicate that the first frequency domain resource is a punctured frequency domain resource, and the second frequency domain resource is a non-punctured frequency domain resource. The second indication information may further directly indicate the second frequency domain resource or an index of the second frequency domain resource, to indicate the terminal to use the second frequency domain resource to perform data transmission.

Optionally, the second indication information may be carried in at least one of the following: a second RRC message or a second DCI message, to reuse existing signaling and reduce design difficulty. It may be understood that the second RRC message may be alternatively represented by using an RRC message 2, an RRC message b, or the like. This is not limited herein.

FIG. 5 is a diagram 1 of RBG frequency domain resource reusing according to this embodiment of this application. As shown in FIG. 5, the network device indicates, by using the first indication information, a terminal 1 to puncture a part of frequency domain resources in the RBG, and the terminal 1 uses a non-punctured RB resource, that is, the first frequency domain resource, to perform data transmission. If a frequency domain resource occupied by a terminal 2 is located in the punctured part in the RBG, that is, an idle RB of the terminal 1, an RB resource corresponding to a non-punctured part in the RBG, that is, the second frequency domain resource, may be allocated to the terminal 2, so that the terminal 1 and the terminal 2 reuse a same RBG. It may be understood that if an actual service requirement of the terminal 1 exceeds one RBG, the RBG is no longer reused by another terminal.

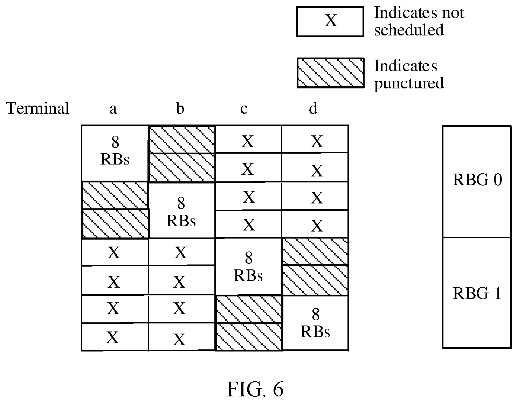

FIG. 6 is a diagram 2 of RBG frequency domain resource reusing according to this embodiment of this application. As shown in FIG. 6, if an RBG 0 and an RBG 1 each include 16 RBs, first 8 RBs of the RBG 0 and first 8 RBs of the RBG 1 are not punctured, and last 8 RBs of the RBG 0 and last 8 RBs of the RBG 1 are punctured. Service requirements of a terminal a, a terminal b, a terminal c, and a terminal d each are 8 RBs, frequency domain resources used by the terminal a and the terminal b to perform data transmission occupy different positions in the RBG 0, and frequency domain resources used by the terminal c and the terminal d to perform data transmission occupy different positions in the RBG 1. In this case, the terminal a and the terminal b may reuse the RBG 0 to perform data transmission, and the terminal c and the terminal d may reuse the RBG 1 to perform data transmission. In this case, the service requirements of the terminal a, the terminal b, the terminal c, and the terminal d can be met by using two RBGs each with 16 RBs. In comparison with a case in which data transmission of the terminal a, the terminal b, the terminal c, and the terminal d is performed by using four RBGs each with 16 RBs, in this case, 50% of frequency domain resources can be saved.

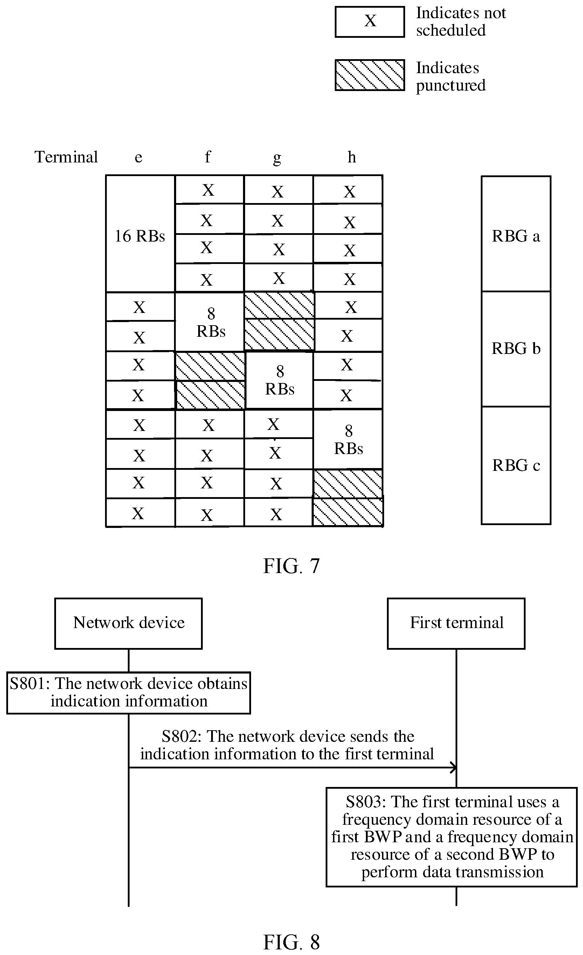

FIG. 7 is a diagram 3 of RBG frequency domain resource reusing according to this embodiment of this application. As shown in FIG. 7, if an RBG a, an RBG b, and an RBG c each include 16 RBs, a service requirement of a terminal e is 12 RBs, service requirements of a terminal f, a terminal g, and a terminal h each are 8 RBs, and frequency domain resources used by the terminal f and the terminal g to perform data transmission occupy different positions in the RBG b, first 8 RBs of the RBG b and first 8 RBs of the RBG c may not be punctured, last 8 RBs of the RBG b and last 8 RBs of the RBG c are punctured, the terminal e can use the RBG a to perform data transmission, the terminal f and the terminal g may be reuse the RBG b to perform data transmission, and the terminal h may use the RBG c to perform data transmission. In other words, the service requirements of the terminal e, the terminal f, the terminal g, and the terminal h can be met by using three RBGs each with 16 RBs. In comparison with a case in which data transmission of the terminal e, the terminal f, the terminal g, and the terminal h is performed by using four RBGs each with 16 RBs, in this case, 25% of frequency domain resources can be saved.

### Embodiment 2

For example, FIG. 8 is a schematic flowchart 2 of a resource allocation method according to an embodiment of this application. The method is applicable to communication between the network device and the first terminal in the foregoing resource allocation system. In this application, for a terminal that does not have a capability of supporting flexible switching between type0 and type1, frequency domain resource allocation is performed using the foregoing type0 type.

Specifically, as shown in FIG. 8, a procedure of the resource allocation method is as follows.

S801: The network device obtains indication information.

The indication information indicates the first terminal to use a first bandwidth part BWP and a second BWP, and bandwidth of a frequency domain resource included in the first BWP is different from bandwidth of a frequency domain resource included in the second BWP.

The first BWP and the second BWP may be indexes corresponding to bandwidth parts. For example, the first BWP may be represented by using an index BWP_x, and the second BWP may be represented by using an index BWP_y. Alternatively, the first BWP and the second BWP may be corresponding bandwidth part values. For example, a bandwidth value of the first BWP may be 20 RBs, and a bandwidth value of the second BWP may be 100 RBs. In this case, as shown in Table 1, an RBG corresponding to the first BWP includes four RBs, and an RBG corresponding to the second BWP includes 16 RBs. The first BWP and the second BWP may alternatively be represented in another manner. This is not specifically limited herein.

The frequency domain resource included in the first BWP may be the RBG corresponding to the first BWP, and the frequency domain resource included in the second BWP may be the RBG corresponding to the second BWP. As shown in Table 1, the bandwidth parts belong to different resource ranges, and also correspond to different RBG sizes. The first BWP and the second BWP belong to different resource ranges, and the first BWP and the second BWP also correspond to different RBG sizes. In other words, the frequency domain resource included in the first BWP is different from the frequency domain resource included in the second BWP.

S802: The network device sends the indication information to the first terminal. The first terminal receives the indication information from the network device.

The network device may send the indication information to the first device by using an RRC message and/or a DCI message. For example, the network device may pre-determine a service requirement of the first terminal by periodically collecting statistics on data such as a quantity of scheduling times of the first terminal and a quantity of allocated RB resources, and determine whether a service requirement of the first terminal at a current TTI moment is a large data packet or a small data packet.

If a pre-determination result of the network device is consistent with a current resource allocation status of the terminal, the terminal maintains a current resource allocation granularity to perform data transmission. If a pre-determination result of the network device is inconsistent with a current resource allocation granularity of the terminal, the network device sends the RRC message and/or the DCI message to the first terminal, to indicate the terminal to switch the current resource allocation granularity.

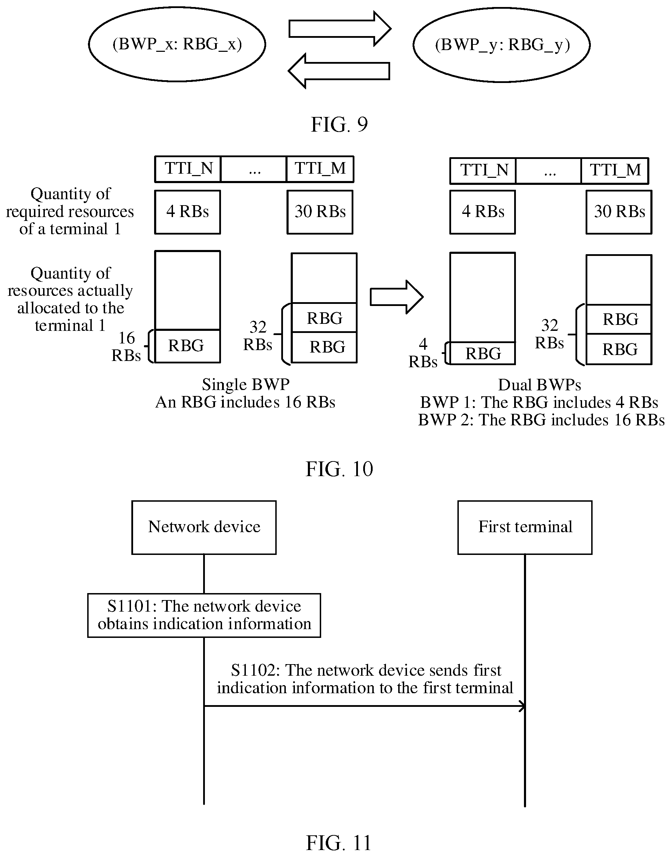

FIG. 9 is a diagram of resource allocation granularity switching according to this embodiment of this application. As shown in FIG. 9, the first BWP corresponds to the small data packet, the index of the first BWP is BWP_x, and the corresponding RBG size is RBG_x; and the second BWP corresponds to the large data packet, the index of the second BWP is BWP_y, and the corresponding RBG size is RBG_y. If the network device pre-determines that the service requirement of the terminal is the large data packet, and the current resource allocation granularity of the terminal corresponds to the small data packet, the network device may indicate, by using the indication message, the terminal to switch from BWP_x to BWP_y, in other words, the network device may indicate, by using the indication message, the terminal to use RBG_y corresponding to BWP_y to perform data transmission, to meet the service requirement of the terminal. If the network device pre-determines that the service requirement of the terminal is the small data packet, and the current resource allocation granularity of the terminal corresponds to the large data packet, the network device may indicate, by using the indication message, the terminal to switch from BWP_y to BWP_x, in other words, the network device may indicate, by using the indication information, the terminal to use RBG_y corresponding to BWP_y to perform data transmission, to meet the service requirement of the terminal.

S803: The first terminal uses the frequency domain resource in the first BWP and the frequency domain resource in the second BWP to perform data transmission.

The network device may specifically indicate, by using the indication information, the first terminal to use the frequency domain resource in the first BWP at a first moment to perform data transmission, and indicate the first terminal to use the frequency domain resource in the second BWP at a second moment to perform data transmission.

A service requirement of the first terminal at the first moment is different from a service requirement of the first terminal at the second moment. For example, the first terminal may be the small data packet at the first moment, and may be the large data packet at the second moment. In this case, the first terminal may use a resource allocation granularity corresponding to the first BWP at the first moment, for example, use the foregoing RBG whose size is four RBs to perform data transmission, and the first terminal may use a resource allocation granularity corresponding to the second BWP at the second moment, for example, use the foregoing RBG whose size is 16 RBs to perform data transmission. There are one or more TTIs between the first moment and the second moment.

FIG. 10 is a diagram of a BWP switching process of the first terminal according to this embodiment of this application. As shown in FIG. 10, if a terminal 1 uses a single BWP to perform data transmission, for example, the terminal 1 uses a bandwidth part of 100 RBs to perform data transmission, the RBG includes 16 RBs, and a quantity of required resources of the terminal 1 in TTI_N is four RBs, but the network device actually allocates 16 RBs to the first terminal to perform data transmission. A quantity of actually required resources of the terminal 1 in TTI_M is 30 RBs, and in this case, the network device actually allocates two RBGs, that is, 32 RBs, to the first terminal to perform data transmission.

If the terminal 1 uses dual BWPs to perform data transmission, for example, the terminal 1 uses system bandwidth BWP 1=20 RBs and BWP 2=100 RBs to perform data transmission, an RBG corresponding to the BWP 1 includes four RBs, and an RBG corresponding to the BWP 2 includes 16 RBs. In this case, the terminal 1 uses the four RBs corresponding to the BWP 1 in TTI_N to perform data transmission, and uses two 16 RBs corresponding to the BWP 2 in TTI_M to perform data transmission.

It can be learned from the foregoing descriptions that, when the terminal 1 uses the single BWP to perform data transmission, and uses frequency domain resources of 16 RBs in TTI_N to perform data transmission of four RBs, remaining frequency domain resources of 12 RBs are wasted, and frequency domain resource utilization is only 25%. However, when the terminal 1 uses the dual BWPs to perform data transmission, and uses the four RBs corresponding to the BWP 1 in TTI_X to perform data transmission to meet an actual requirement, 75% of frequency domain resources can be saved, thereby improving the frequency domain resource utilization. A terminal may further indicate, by using the indication message, the terminal 1 to quickly switch a frequency domain resource allocation granularity of the first terminal through BWP switching in each TTI, so that the frequency domain resource allocation granularity of the first terminal can be dynamically adjusted.

Optionally, the network device sends configuration information to the first terminal. The first terminal receives the configuration information from the network device.

The configuration information is used to configure, for the first terminal, the first BWP and the second BWP that are used by the first terminal. The configuration information may be carried in the RRC message. The network device sends the configuration information to the first terminal by using the RRC message. For example, the configuration information may be the foregoing first BWP (BWP_x, RBG_x) or the foregoing first BWP (BWP_y, RBG_y). The network device pre-configures the first BWP and the second BWP of the first terminal, so that the network device can directly use a resource of the first terminal when scheduling the resource of the first terminal, to shorten a delay and improve communication efficiency between the network device and the first terminal.

In conclusion, in this embodiment of this application, the network device indicates, by using the indication information, the first terminal to use corresponding BWPs at different moments to perform data transmission, and different bandwidth may support different resource granularity sizes, so that the first terminal can select a corresponding RBG size based on an actual service requirement, to avoid a waste of resources, and match the service requirement of the terminal with a resource allocation type in a timely manner. The terminal may further indicate, by using the indication message, the first terminal to quickly switch the frequency domain resource allocation granularity of the first terminal through BWP switching in each TTI, so that the frequency domain resource allocation granularity of the first terminal can be dynamically adjusted.

### Embodiment 3

For example, FIG. 11 is a schematic flowchart 3 of a resource allocation method according to an embodiment of this application. The method is applicable to communication between the network device and the first terminal in the foregoing resource allocation system. In this application, for a terminal that does not have a capability of supporting flexible switching between type0 and type1, frequency domain resource allocation is performed using the foregoing type0 type.

Specifically, as shown in FIG. 11, a procedure of the resource allocation method is as follows.

S1101: The network device obtains indication information.

The indication information may indicate the first terminal to use first power to perform data transmission.

The first power may include power of a first frequency domain resource and power of a second frequency domain resource. The first frequency domain resource is a frequency domain resource that is allocated by the network device to the first terminal for use, that is, power that is pre-allocated by the network device to the first device for use. The second frequency domain resource is a frequency domain resource that is allocated by the network device to a second terminal and that is not used by the second terminal, that is, idle power that is allocated by the network device to a second device and that is not used by the second device, or a part of the idle power.

For example, a service requirement of a terminal 1 is a small data packet, and a service requirement of a terminal 2 is a large data packet. The network device allocates a frequency domain resource to the terminal 1 based on an RBG 1, and the RBG 1 includes N RBs. In this case, an actual resource requirement of the terminal 1 is less than one RBG 1. The terminal 1 occupies M RBs in the RBG 1. In this case, power of N-M RBs in the RBG 1 is extracted, in other words, power is reduced proportionally on the RBG in which the terminal 1 is located. The N-M RBs are the second frequency domain resource, and the power of the N-M RBs is the power of the second frequency domain resource, in other words, the power of the second frequency domain resource is idle power of the terminal 1. In a same TTI, the network device allocates frequency domain resources to the terminal 2 based on an RBG 2 and an RBG 3, and the RBG 2 and the RBG 3 include X RBs in total. If an actual service requirement of the terminal 2 is greater than X RBs, the network device may extract the power of the second frequency domain resource of the terminal 1 for the terminal 2 to perform data transmission, in other words, power is increased proportionally on the RBG 2 and the RBG 3 in which the terminal 2 is located. It may be understood that in this case, the X RBs are the first frequency domain resource, power of the X RBs is the power of the first frequency domain resource, and the first power may be a sum of the power of the (N-M) RBs and the power of the X RBs, that is, the first power is power of N-M+X RBs.

Optionally, the indication information is carried in at least one of the following: an RRC message or a DCI message, to reuse existing signaling and reduce design difficulty.

S1102: The network device sends the indication information to the first terminal.

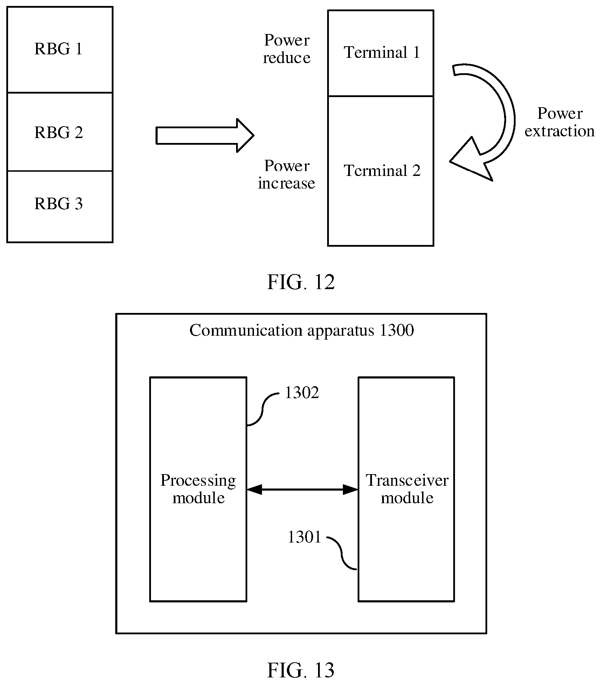

The network device may send the indication information to the first device by using the RRC message and/or the DCI message, to indicate the first terminal to use the first power to perform data transmission. For example, FIG. 12 is a diagram of terminal power conversion according to this embodiment of this application. As shown in FIG. 12, in a same TTI, the terminal 2 uses the power of the X RBs allocated by the network device and the idle power of the terminal 1, which is the power of the N-M RBs, that is, uses the power of the N-M+X RBs, to perform data transmission. If the power of the N-M+X RBs can support modulation and coding scheme (modulation and coding scheme, MCS) improvement of the terminal 2, more data may be carried on the X RBs of the terminal 2 for transmission, and power is increased proportionally on an RBG in which the terminal 2 is located. If the power of the N-M+X RBs cannot support MCS improvement of the terminal 2, data carried on the X RBs of the terminal 2 remains unchanged, and the terminal 2 may increase an interference-plus-noise ratio in a data transmission process, and reduce a bit error rate.

In conclusion, in this embodiment of this application, the network device may perform conversion between a frequency domain resource RB and a power resource based on an actual service requirement of a terminal, and reduce a resource allocation granularity to an RB level in a power domain dimension, so that a frequency domain resource allocation granularity of the terminal can be dynamically adjusted, and power that is not used by the terminal can be extracted. In this way, a waste that is of frequency domain resources and that is caused by redundant power resources is reduced, thereby improving frequency domain resource utilization.

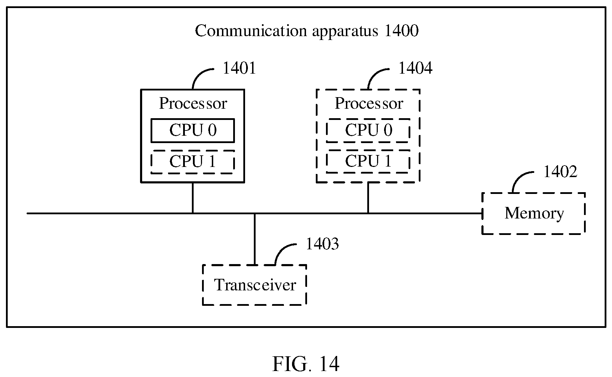

The foregoing describes, in detail with reference to FIG. 4 to FIG. 12, the resource allocation methods provided in embodiments of this application. The following describes, in detail with reference to FIG. 13 and FIG. 14, communication apparatuses configured to perform resource allocation methods provided in embodiments of this application.

For example, FIG. 13 is a diagram 1 of a structure of a communication apparatus according to an embodiment of this application. As shown in FIG. 13, the communication apparatus 1300 includes a transceiver module 1301 and a processing module 1302. For ease of description, FIG. 13 shows only main components of the communication apparatus.

In some embodiments, the communication apparatus 1300 is applicable to the resource allocation system shown in FIG. 3, and performs a function of the foregoing network device.

The transceiver module 1301 may be configured to perform functions of receiving and sending a message by a network device, for example, functions in steps such as S402, S802, and S1102. The processing module 1302 may perform a function of the network device other than receiving and sending the message, for example, functions in steps such as S401, S801, and S1101. For example, the processing module 1302 is configured to obtain first indication information. The transceiver module 1301 is configured to send the first indication information to a first terminal. The network device reserves, for the first terminal, a frequency domain resource set that can be used by the first terminal. The first indication information indicates the first terminal to use a first frequency domain resource in the frequency domain resource set, and indicates the first terminal not to use a second frequency domain resource in the frequency domain resource set.

Optionally, the transceiver module 1301 may include a sending module and a receiving module. The sending module is configured to implement a sending function of the communication apparatus 1300, and the receiving module is configured to implement a receiving function of the communication apparatus 1300.

Optionally, the communication apparatus 1300 may further include a storage module, and the storage module stores a program or instructions. When the processing module 1302 executes the program or the instructions, the communication apparatus 1300 is caused to perform the foregoing resource allocation method.

It should be noted that the communication apparatus 1300 may be a network device, may be a chip (system) or another part or component that can be disposed in the network device, or may be an apparatus that includes the network device. This is not limited in this application.

In addition, for technical effects of the communication apparatus 1300, refer to the technical effects of the foregoing resource allocation methods. Details are not described herein again.

In some other embodiments, in some embodiments, the communication apparatus 1300 is applicable to the resource allocation system shown in FIG. 3, and performs a function of the foregoing first terminal.

The transceiver module 1301 may be configured to perform functions of receiving and sending a message by a first terminal, for example, functions in steps such as S402, S802, and S1102. The processing module 1302 may perform a function of the first terminal other than receiving and sending the message, for example, functions in steps such as S403 and S803. For example, the transceiver module 1301 is configured to receive first indication information from a network device. The processing module 1302 is configured to use a first frequency domain resource. The network device reserves, for the first terminal, a frequency domain resource set that can be used by the first terminal. The first indication information indicates the first terminal to use the first frequency domain resource in the frequency domain resource set, and indicates the first terminal not to use a second frequency domain resource in the frequency domain resource set.

Optionally, the transceiver module 1301 may include a sending module and a receiving module. The sending module is configured to implement a sending function of the communication apparatus 1300, and the receiving module is configured to implement a receiving function of the communication apparatus 1300.

Optionally, the communication apparatus 1300 may further include a storage module, and the storage module stores a program or instructions. When the processing module 1302 executes the program or the instructions, the communication apparatus 1300 is caused to perform the foregoing resource allocation method.

It should be noted that the communication apparatus 1300 may be a terminal, may be a chip (system) or another part or component that can be disposed in the terminal, or may be an apparatus that includes the terminal device. This is not limited in this application.

In addition, for technical effects of the communication apparatus 1300, refer to the technical effects of the foregoing resource allocation methods. Details are not described herein again.

For example, FIG. 14 is a diagram 2 of a structure of a communication apparatus according to an embodiment of this application. The communication apparatus may be a terminal, or may be a chip (system) or another part or component that can be disposed in the terminal. As shown in FIG. 14, the communication apparatus 1400 may include a processor 1401. Optionally, the communication apparatus 1400 may further include a memory 1402 and/or a transceiver 1403. The processor 1401 is coupled to the memory 1402 and the transceiver 1403, for example, may be connected to the memory 1402 and the transceiver 1403 through a communication bus.

The following specifically describes the components of the communication apparatus 1400 with reference to FIG. 14.

The processor 1401 is a control center of the communication apparatus 1400, and may be one processor, or may be a general name of a plurality of processing elements. For example, the processor 1401 is one or more central processing units (central processing unit, CPU), may be an application-specific integrated circuit (application-specific integrated circuit, ASIC), or is configured as one or more integrated circuits for implementing embodiments of this application, for example, one or more microprocessors (digital signal processor, DSP) or one or more field programmable gate arrays (field programmable gate array, FPGA).

Optionally, the processor 1401 may perform various functions of the communication apparatus 1400 by running or executing a software program stored in the memory 1402 and invoking data stored in the memory 1402, for example, perform the foregoing resource allocation methods shown in FIG. 4 to FIG. 12.

During specific implementation, in an embodiment, the processor 1401 may include one or more CPUs, for example, a CPU 0 and a CPU 1 shown in FIG. 14.

During specific implementation, in an embodiment, the communication apparatus 1400 may alternatively include a plurality of processors, for example, the processor 1401 and a processor 1404 shown in FIG. 14. Each of the processors may be a single-core processor (single-CPU), or may be a multi-core processor (multi-CPU). The processor herein may be one or more devices, circuits, and/or processing cores configured to process data (for example, computer program instructions).

The memory 1402 is configured to store the software program for executing the solution of this application, and the processor 1401 controls the execution of the software program. For a specific implementation, refer to the foregoing method embodiments. Details are not described herein again.

Optionally, the memory 1402 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. The memory 1402 may be integrated with the processor 1401, or may exist independently, and is coupled to the processor 1401 by using an interface circuit (not shown in FIG. 14) of the communication apparatus 1400. This is not specifically limited in this embodiment of this application.

The transceiver 1403 is configured to communicate with another communication apparatus. For example, the communication apparatus 1400 is the terminal, and the transceiver 1403 may be configured to: communicate with a network device or communicate with another terminal device. For another example, the communication apparatus 1400 is a network device, and the transceiver 1403 may be configured to: communicate with a terminal or communicate with another network device.

Optionally, the transceiver 1403 may include a receiver and a transmitter (not separately shown in FIG. 14). The receiver is configured to implement a receiving function, and the transmitter is configured to implement a sending function.

Optionally, the transceiver 1403 may be integrated with the processor 1401, or may exist independently, and is coupled to the processor 1401 by using an interface circuit (not shown in FIG. 14) of the communication apparatus 1400. This is not specifically limited in this embodiment of this application.

It should be noted that the structure of the communication apparatus 1400 shown in FIG. 14 does not constitute a limitation on the communication apparatus. An actual communication apparatus may include more or fewer components than those shown in the figure, combine some components, or have different component arrangements.

In addition, for technical effects of the communication apparatus 1400, refer to the technical effects of the resource allocation methods in the foregoing method embodiments. Details are not described herein again.

An embodiment of this application provides a resource allocation system. The resource allocation system includes the network device shown in FIG. 3 and one or more terminals.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any regular processor or the like.

It may be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented using software, hardware (for example, a circuit), firmware, or any combination thereof. When the software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium that can be accessed by the computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects, and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, but may alternatively indicate an "and/or" relationship. For details, refer to the context for understanding.

In this application, "at least one" means one or more, and "a plurality of" means two or more. "At least one of the following items (pieces)" or a similar expression thereof means any combination of these items, including any combination of single items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application.

A person of ordinary skill in the art may be aware that in combination with the examples described in embodiments disclosed in this specification, units and algorithm steps may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for convenient and brief description, for a specific operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes a medium that can store program code, like a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource allocation method, wherein the method comprises:
obtaining, by a network device, first indication information, wherein the network device reserves, for a first terminal, a frequency domain resource set that can be used by the first terminal, the frequency domain resource set comprises a first frequency domain resource and a second frequency domain resource, and the first indication information indicates the first terminal to use the first frequency domain resource in the frequency domain resource set, and indicates that the second frequency domain resource is a punctured frequency domain resource; and
sending, by the network device, the first indication information to the first terminal.

2. The method according to claim 1, wherein the first indication information comprises information indicating that the first frequency domain resource is a non-punctured frequency domain resource, the information indicating that the first frequency domain resource is a non-punctured frequency domain resource indicates the first terminal to use the first frequency domain resource, and information indicating that the second frequency domain resource is a punctured frequency domain resource indicates the first terminal not to use the second frequency domain resource.

3. The method according to claim 1 or 2, wherein the frequency domain resource set is a resource block group RBG, and the first frequency domain resource or the second frequency domain resource comprises one or more resource blocks RBs.

4. The method according to any one of claims 1 to 3, wherein the first indication information is carried in at least one of the following: a first radio control information RRC message or a first downlink control information DCI message.

5. The method according to any one of claims 1 to 4, wherein the method further comprises:
sending, by the network device, second indication information to a second terminal, wherein the second indication information indicates the second terminal to use the second frequency domain resource in the frequency domain resource set.

6. The method according to claim 5, wherein the second indication information is carried in at least one of the following: a second RRC message or a second DCI message.

7. A resource allocation method, wherein the method comprises:
receiving, by a first terminal, first indication information from a network device, wherein the first indication information indicates the first terminal to use a first frequency domain resource in the frequency domain resource set, and indicates that the second frequency domain resource is a punctured frequency domain resource; and
using, by the first terminal, the first frequency domain resource.

8. The method according to claim 7, wherein the first indication information comprises information indicating that the first frequency domain resource is a non-punctured frequency domain resource, the information indicating that the first frequency domain resource is a non-punctured frequency domain resource indicates the first terminal to use the first frequency domain resource, and information indicating that the second frequency domain resource is a punctured frequency domain resource indicates the first terminal not to use the second frequency domain resource.

9. The method according to claim 7 or 8, wherein the frequency domain resource set is a resource block group RBG, and the first frequency domain resource or the second frequency domain resource comprises one or more resource blocks RBs.

10. The method according to any one of claims 7 to 9, wherein the first indication information is carried in at least one of the following: a first RRC message or a first DCI message.

11. A resource allocation method, wherein the method comprises:
receiving, by a second terminal, second indication information from a network device, wherein the second indication information indicates the second terminal to use a second frequency domain resource, the network device reserves, for another terminal, a frequency domain resource set that can be used by the another terminal, and the second frequency domain resource belongs to the frequency domain resource set; and
using, by the second terminal, the second frequency domain resource.

12. The method according to claim 11, wherein the second indication information is carried in at least one of the following: a second RRC message or a second DCI message.

13. A resource allocation method, wherein the method comprises:
obtaining, by a network device, indication information, wherein the indication information indicates a first terminal to use a first bandwidth part BWP and a second BWP, and bandwidth of a frequency domain resource comprised in the first BWP is different from bandwidth of a frequency domain resource comprised in the second BWP; and
sending, by the network device, the indication information to the first terminal.

14. The method according to claim 13, wherein the indication information specifically indicates the first terminal to use the frequency domain resource in the first BWP at a first moment to perform data transmission, and indicates the first terminal to use the frequency domain resource in the second BWP at a second moment to perform data transmission.

15. The method according to claim 13, wherein before the sending, by the network device, the indication information to the first terminal, the method further comprises:
sending, by the network device, configuration information to the first terminal, wherein the configuration information is used to configure, for the first terminal, the first BWP and the second BWP that are used by the first terminal.

16. The method according to claim 13, wherein the indication information is carried in at least one of the following: an RRC message or a DCI message.

17. A resource allocation method, wherein the method comprises:
receiving, by a first terminal, indication information from a network device, wherein the indication information indicates the first terminal to use a first bandwidth part BWP and a second BWP, and bandwidth of a frequency domain resource comprised in the first BWP is different from bandwidth of a frequency domain resource comprised in the second BWP; and
using, by the first terminal, the frequency domain resource in the first BWP and the frequency domain resource in the second BWP to perform data transmission.

18. The method according to claim 17, wherein the indication information specifically indicates the first terminal to use the frequency domain resource in the first BWP at a first moment to perform data transmission, and indicates the first terminal to use the frequency domain resource in the second BWP at a second moment to perform data transmission.

19. The method according to claim 17, wherein before the receiving, by a first terminal, indication information from a network device, the method further comprises:
receiving, by the first terminal, configuration information from the network device, wherein the configuration information is used to configure, for the first terminal, the first BWP and the second BWP that are used by the first terminal.

20. The method according to claim 17, wherein the indication information is carried in at least one of the following: an RRC message or a DCI message.

21. A resource allocation method, wherein the method comprises:
obtaining, by a network device, indication information, wherein the indication information indicates a first terminal to use first power to perform data transmission, the first power comprises power of the first frequency domain resource and power of the second frequency domain resource, the first frequency domain resource is a frequency domain resource that is allocated by the network device to the first terminal for use, and the second frequency domain resource is a frequency domain resource that is allocated by the network device to a second terminal and that is not used by the second terminal; and
sending, by the network device, the indication information to the first terminal.

22. The method according to claim 21, wherein the indication information is carried in at least one of the following: an RRC message or a DCI message.

23. A resource allocation apparatus, wherein the apparatus comprises a module configured to perform the method according to any one of claims 1 to 22.

24. A resource allocation apparatus, wherein the resource allocation apparatus comprises a processor and a memory, wherein the memory is configured to store computer instructions, and when the processor executes the instructions, the resource allocation apparatus is caused to perform the method according to any one of claims 1 to 22.

25. A computer-readable storage medium, wherein the computer-readable storage medium comprises a computer program or instructions, and when the computer program or the instructions are run on a computer, the computer is caused to perform the method according to any one of claims 1 to 22.

26. A computer program product, comprising a program, wherein when the program is executed by a processor, the method according to any one of claims 1 to 22 is implemented.
